# EUROPÄISCHE PATENTSCHRIFT

(11) **EP 0 573 794 B1**
(45) Veröffentlichungstag und Bekanntmachung des Hinweises auf die Patenterteilung: **13.03.1996**
(21) Anmeldenummer: 93107548.5
(22) Anmeldetag: 10.05.1993
(51) Int. Cl.: H02K 3/32

(54) **Hochspannungsisolation für Statorwicklungen elektrischer Maschinen**
High-voltage insulation for stator windings of electric machines
Isolation à haute tension pour enroulements statoriques de machines électriques

(30) Priorität: 10.06.1992 DE 4218927
(43) Veröffentlichungstag der Anmeldung: 15.12.1993
(73) Patentinhaber: ASEA BROWN BOVERI AG, CH-5401 Baden (CH)
(72) Erfinder: Schuler, Roland, CH-5430 Wettingen (CH)
(74) Vertreter: Hetzer, Hans Jürgen

(56) Entgegenhaltungen:
- EP-A- 0 368 038
- GB-A- 1 054 045
- US-A- 2 320 866

## Beschreibung

### Technisches Gebiet

Die Erfindung bezieht sich auf eine Hochspannungsisolation für Statorwicklungen elektrischer Maschinen, umfassend eine Teilleiterisolation und eine Hauptisolation, bei welcher die Teilleiter zu Stäben zusammengefasst und von einer Hauptisolation umgeben sind, die mit Tränkharz imprägniert ist, wobei die Hauptisolation mehrschichtige, Glimmer und Trägermaterial enthaltende Bänder aufweist, die in mehreren Lagen um die Stäbe gewickelt sind.

### Technologischer Hintergrund und Stand der Technik

Bei der Isolierung der Statorwicklungsleiter elektrischer Machinen gegen das geerdete Blechpaket kommt es entscheidend auf die elektrischen und mechanischen Eigenschaften der Hauptisolation an. Bei Nennspannungen von einigen 100 V bis zu 30000 V variert die Dicke der Hauptisolation bei einer Beanspruchung von etwa 2 kV/mm im Bereich von 0,5 bis 8 mm. Hinzu kommen die hohen Anforderungen an die Isolierung, die aus der thermischen Beanspruchung und bei langen Maschinen aus thermomechanischen Dehnungskräften in der Längsrichtung der Nut resultieren. Die Nutisolierung muss deshalb möglichst luftfrei und in fester Verbindung mit dem Leiter aufgebracht werden.

Für die Herstellung kontinuierlicher Wicklungsisolierungen hat sich in den letzten Jahren bei Stabwicklungen in grossem Umfang die Vakuumtränkung mit härtbaren, lösungsmittelfreien Harzen eingeführt. Sie ermöglicht die Verwendung von Fein- oder Spaltglimmerbändern verschiedenster Art, die zunächst in nahezu trockener Form mit einem geringen Bindemittelanteil auf die Stäbe aufgewickelt werden können. Dazu werden Glimmerbänder zwischen 20 und 40 mm Breite in Dicken von 0,1 bis 0,3 mm von Hand oder maschinell überlappend in genau vorgegebener Lagenzahl aufgebracht. Spaltglimmerbänder werden in der Regel mit zwei Trägerlagen verarbeitet. Ueblich sind solche aus Papier, Polyestervlies oder Glasgewebe. Feinglimmerbänder lassen sich auch mit einer Trägerlage verwenden (vgl. H.Sequenz "Herstellung der Wicklungen elektrischer Machinen", Springer Verlag Wien - New York, 1973, Seiten 147 ff.).

Glimmerbänder mit einer einzigen Trägerlage werden grundsätzlich aus mechanischen Festigkeitsgründen so aufgewickelt, dass die Glimmerschicht gegen den Leiter gerichtet ist. Aufgrund der Struktur des Glimmermaterials ist die Haftung der innersten Lage wenig dauerhaf. Bei den im Betrieb auftretenden mechanischen und thermischen Beanspruchungen treten Ablösungserscheinungen auf, welche die Spannungsfestigkeit der Hauptisolation vermindern.

Werden durchwegs beidseits durch Träger abgedeckte Glimmerbänder verwendet, vermindert sich der totale Glimmeranteil in der Hauptisolation.

### Kurze Darstellung der Erfindung

Ausgehend vom Stand der Technik liegt der Erfindung die Aufgabe zugrunde, eine Hochspannungsisolation für Stabwicklungen elektrischer Maschinen zu schaffen, die einen möglichst hohen Glimmeranteil aufweist und gleichzeitig gut an den Leitern haftet, und das Eindringen des Imprägnierharzes in den Isolierwickel erleichtert.

Die Aufgabe wird erfindungsgemäss dadurch gelöst, dass nur die erste Lage der Hauptisolation aus einem dreischichtigen, beidseits textile Träger aufweisenden Glimmerband besteht, an welche erste Lage sich mehrere Lagen Glimmerband mit einem einzigen textilen Träger anschliessen, wobei bei diesen Lagen die Glimmerschicht gegen den Leiter gerichtet ist.

Auf diese Weise wird beim späteren Imprägnieren der Hauptisolation die Verklebung Isolation/Leiter wesentlich verbessert, weil im oder am textilen Träger zwischen Glimmerschicht und Leiteroberfläche Längs- und Querkanäle vorhanden sind, die als Imprägnierhilfe wirken und die eine optimale Benetzung mit Imprägniermittel bewirken, und zudem der textile Träger sicher mit dem Leiter verklebt.

### Kurze Beschreibung der Zeichnungen

In der Zeichnung ist in schematischer Darstellung ein Ausführungsbeispiel der Erfindung dargestellt; dabei zeigt
- Fig.1: die Draufsicht auf eine aus Roebelstäben aufgebaute Statorwicklung einer elektrischen Maschine;
- Fig.2: einen Querschnitt durch eine Statornut mit eingelegtem Stab;
- Fig.3: eine vergrösserte Darstellung des Details X aus Fig.2;
- Fig.4: eine vergrösserte Darstellung des Details Y aus Fig.3;

### Wege zur Ausführung der Erfindung

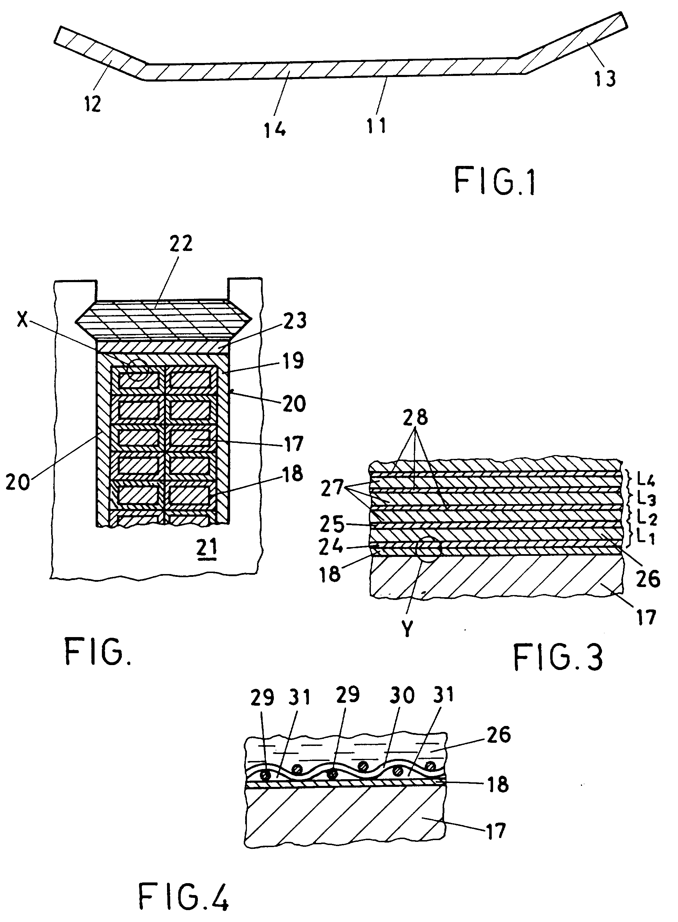

Ein Statorstab einer elektrischen Maschine gemäss Fig.1 weist im Nutbereich einen gerade Spulenabschnitt 11 und im Wickelkopfbereich gebogene Abschnitte 12 und 13 auf. Der Stab ist mit einer generell mit der Bezugsziffer 14 bezeichneten Isolation versehen, die Gegenstand der vorliegenden Erfindung ist.

Wie aus dem Querschnitt gemäss Fig.2 hervorgeht, ist der Stab Spule aus einer Vielzahl gegeneinander isolierter Teilleiter 17 aufgebaut, die nach dem Roebel-Prinzip verdrillt sind. Jeder Teilleiter weist eine Teilleiter-Isolation 18 bekannter Bauart auf. Die Teilleiter sind zu einem Leiterbündel zusammengefasst und von einer gemeinsamen Isolierhülse, der Hauptisolation 19 umgeben und liegen in einer Statornut 20 im Blechpaket 21 der Maschine. Die Fixierung der Stäbe erfolgt durch Nutkeile 22 und Keilunterlagen 23.

Der Aufbau der Hauptisolation 19 geht aus Fig.3, die eine (nicht massstäbliche) Vergrösserung des Details X aus Fig.2 zeigt. Die Hauptisolation 19 besteht aus einer Vielzahl übereinanderliegender Lagen L₁, L₂, L₃, L₄...Glimmerbänder. Die innerste Lage L1 umfasst dabei eine beidseits von textilen Trägern 24, 25, vorzugsweise Glasfasergewebe, abgedeckte Glimmerschicht 26. Unter "textiler Träger" wird hierbei ein aus Fasern oder Fäden bestehendes Band verstanden, das im Gegensatz zu einer Folie in, quer und senkrecht zur Bandrichtung für Imprägnierharz durchlässig ist. Die sich daran anschliessenden Lage L₂, L₃, L₄... hingegen bestehen aus je einer Glimmerschicht 27, die nur einen einzigen textilen Träger 28 aufweist. Das die Lagen L₂, L₃, L₄... bildende Glimmerband ist dabei so aufgebracht, dass jeweils die Glimmerschicht 27 zum Kupferleiter 17 hinweist.

In Fig.4, die das Detail Y aus Fig.3 vergrössert darstellt, ist gut zu erkennen, dass sich zwischen den Kettfäden 29 und Schussfäden 30 des textilen Trägers 24 in Stablängsrichtung verlaufenden Kanäle 31 zwischen der Glimmerschicht 26 und der Teilleiter-Isolation 18 ergeben. Durch diese Kanäle kann das Tränkharz beim späteren Imprägnieren der Hauptisolation an praktisch alle Stellen der Leiteroberfläche gelangen, diese sicher und in kurzer Zeit benetzen und eine optimale Verklebung der Hauptisolation mit dem Leiter sicherstellen.

### Bezeichnungsliste

- 11: gerader Stababschnitt
- 12,13: gebogene Stababschnitte
- 14: Isolation allgemein
- 17: Teilleiter
- 18: Teilleiter-Isolation
- 19: Hauptisolation
- 20: Statornut
- 21: Statorblechkörper
- 22: Nutkeil
- 23: Keilunterlage
- 24,25,28: textile Träger
- 26,27: Glimmerschichten
- 29: Kettfäden
- 30: Schussfäden
- 31: Längskanäle
- L₁,L₂,..: Glimmerschicht-Lagen

## Patentansprüche

1. Hochspannungsisolation für Statorwicklungen elektrischer Maschinen, umfassend eine Teilleiterisolation und eine Hauptisolation (19), bei welcher die Teilleiter zu Stäben zusammengefasst und von einer Hauptisolation (19) umgeben sind, die mit Tränkharz imprägniert ist, wobei die Hauptisolation mehrschichtige, Glimmer und Trägermaterial enthaltende Bänder aufweist, die in mehreren Lagen (L₁,L₂,L₃,L₄,...) um die Stäbe gewickelt sind, dadurch gekennzeichnet, dass nur die erste Lage (L₁) der Hauptisolation (19) aus einem dreischichtigen, beidseits textile Träger (24,25) aufweisenden Glimmerband (26) besteht, an welche erste Lage (L₁) sich mehrere Lagen (L₂,L₃,L₄,...) Glimmerband (27) mit einem einzigen textilen Träger (28) anschliessen, wobei bei diesen Lagen (L₂,L₃,L₄,...) die Glimmerschicht (27) gegen den Leiter gerichtet ist.

2. Hochspannungsisolation nach Anspruch 1, dadurch gekennzeichnet, dass die textilen Träger (24,25,28) aus Glasgewebe bestehen.

## Claims

1. High-voltage insulation for stator windings of electric machines, comprising a component conductor insulation and a major insulation (19), in which the component conductors are combined to form bars and are surrounded by a major insulation (19) which is impregnated with impregnating resin, the major insulation having multilayer strips which contain mica and carrier material and are wound around the bars in a plurality of layers (L₁, L₂, L₃, L4, ...), characterized in that only the first layer (L₁) of the major insulation (19) consists of a three-layer mica strip (26) having textile carriers on both sides (24, 25), which first layer (L₁) is adjoined by a plurality of layers (L₂, L₃, L₄ ...) of mica strip (27) having a single textile carrier (28), the mica layer (27) being directed against the conductor in the case of these layers (L₂, L₃, L₄, ...).

2. High-voltage insulation according to Claim 1, characterized in that the textile carriers (24, 25, 28) consist of glass fabric.

## Revendications

1. Isolation à haute tension pour enroulements statoriques de machines électriques, comprenant une isolation des conducteurs élémentaires et une isolation principale (19), avec laquelle les conducteurs élémentaires sont assemblés en barres et sont entourés d'une isolation principale (19), laquelle est imprégnée de résine d'imprégnation, l'isolation principale présentant plusieurs bandes contenant du mica et un matériau porteur qui sont enroulées sur plusieurs couches (L₁, L₂, L₃, L₄...) autour de la barre, caractérisée par le fait que seule la première couche (L₁) de l'isolation principale (19) est composée d'une bande de mica (26) à trois couches munies des deux côtés d'un support textile (24, 25), plusieurs couches (L₂, L₃, L₄...) de bande de mica (27) munies d'un seul support textile (28) sont rattachées à ladite première couche (L₁), la couche de mica (27) desdites couches (L₂, L₃, L₄...) étant orientée vers le conducteur.

2. Isolation à haute tension conforme à la revendication 1, caractérisée par le fait que les supports textiles (24, 25, 28) sont en tissu de verre.
